Europäisches Patentamt

European Patent Office

Office européen des brevets

(19)

(11) Veröffentlichungsnummer : **0 170 778**
**B1**

(12) **EUROPÄISCHE PATENTSCHRIFT**

(45) Veröffentlichungstag der Patentschrift :
**15.06.88**

(51) Int. Cl.⁴ : **G 01 B 15/04**, G 01 B 15/02

(21) Anmeldenummer : **85104074.1**

(22) Anmeldetag : **03.04.85**

(54) **Vorrichtung zur Messung der Dicke von gewalzten Blechbändern.**

(30) Priorität : **10.07.84 DE 3425295**

(43) Veröffentlichungstag der Anmeldung :
**12.02.86 Patentblatt 86/07**

(45) Bekanntmachung des Hinweises auf die Patenterteilung : **15.06.88 Patentblatt 88/24**

(84) Benannte Vertragsstaaten :
**AT BE DE FR GB IT LU NL**

(56) Entgegenhaltungen :
**DE-A- 3 140 714**
**FR-A- 1 234 209**
**US-A- 3 866 047**

(73) Patentinhaber : **Hoesch Aktiengesellschaft**
**Eberhardstrasse 12**
**D-4600 Dortmund 1 (DE)**

(72) Erfinder : **Kopineck, Hermann-Josef, Prof. Dr. rer. nat.**
**Wildbannweg 36**
**D-4600 Dortmund 50 (DE)**
Erfinder : **Böttcher, Wolfgang, Dr.**
**Auf dem Hilf 35**
**D-5840 Schwerte 4 (DE)**

EP 0 170 778 B1

Jouve, 18, rue St-Denis, 75001 Paris, France

**Beschreibung**

Die Erfindung betrifft eine Vorrichtung zur Messung des Dickenprofils von gewalzten metallischen Blechen und Blechbändern mit einer Röntgenröhre, mit einer dicht vor dieser liegenden beweglichen Schlitzblende, mit in einem Abstand davor, entlang einer Linie fest installierten auf die Strahlung ausgerichteten Strahlungsempfängern, wobei das zu messende Blech oder Blechband durch die Strahlung zwischen der Röntgenröhre bzw. Schlitzblende und den Strahlungsempfängern so hindurchbewegt wird, daß seine Breite sich entlang der Linie der fest installierten Strahlungsempfänger erstreckt und an die Strahlungsempfänger und einen Weggeber der Schlitzposition ein Verarbeitungsgerät zur Bestimmung der Strahlungsabsorption und der Zuordnung zu den Dicken des Blechbandes und den über der Breite des Blechbandes verteilten Meßbereichen angeschlossen ist, das mit einem Anzeigegerät verbunden ist.

Eine Vorrichtung zur Dickenprofilmessung ist aus der DE-A-31 40 714 bekannt. Diese hat den Nachteil, daß nur relativ ungenaue Messungen durchgeführt werden können. Es ist wegen der Größe der Empfänger nicht möglich, das zu messende Blechband in schmale Bereiche zu unterteilen, zwischen denen keine nicht gemessenen Bereiche liegen. Ein weiterer Nachteil besteht darin, daß die Anzahl der verwendeten Strahlungsempfänger sehr groß ist, wodurch das Gerät kompliziert und teuer wird.

Aus der US-A-38 66 047 ist eine weitere Vorrichtung bekannt, die diese Nachteile behebt, weil sie mit breiten Strahlungsempfängern und einer beweglichen Schlitzblende arbeitet.

Der Nachteil dieser Vorrichtung besteht darin, daß pro Sekunde nur wenige Meßwerte ermittelt werden können, weil die Schlitzblende nur sehr langsam oszillierend bewegt werden kann, da diese eine große Masse zwecks Abschirmwirkung haben muß, wenn man sie zum Messen von Blechbändern benutzen würde, weil dazu eine hohe Strahlungsenergie erforderlich ist. Diese große Masse verursacht auch schwingende Bewegungen des gesamten Gestells, wodurch besonders bei größeren Entfernungen zwischen der Strahlungsquelle und dem Strahlungsempfänger schmale Meßbereiche nicht möglich sind.

Die geringe Anzahl von Messungen pro Sekunde macht diese Vorrichtung zur Überwachung eines schnell laufenden Walzwerkes ungeeignet. Für den Einsatz in einem Walzwerk insbesondere in einem Breitbandwalzwerk, ist es außerdem erforderlich, daß zwischen der Röntgenröhre und dem Strahlungsempfänger ein sehr großer Raum frei bleibt, durch den das zu messende Blechband hindurchgeführt wird. Auf einem Rollgang schlagen besonders die Anfänge der Bleche oft hoch und sie würden die Meßvorrichtung zerstören, wenn nicht ein freier Raum von über 2000 mm über dem Rollgang vorhanden ist.

Der Erfindung liegt die Aufgabe zugrunde, eine Meßvorrichtung zum Einsatz an Walzwerken oder Rollgängen zu schaffen, die pro Sekunde eine sehr große Anzahl von Meßwerten ergibt, wobei zum Zwecke einer großen örtlichen Auflösung das Blechband in sehr schmale über die Breite verteilte zu messende Streifen unterteilt wird, zwischen denen praktisch keine nennenswerten Lücken vorhanden sind, und bei der der Abstand zwischen der Schlitzblende und den Strahlungsempfängern aus Sicherheitsgründen extrem groß ist und eine extrem große Meßgenauigkeit erreicht wird.

Diese Aufgabe wird entsprechend dem Anspruch 1 gelöst. Weiterbildungen der Erfindung sind in den abhängigen Ansprüchen 2 bis 3 beschrieben.

Ein Ausführungsbeispiel wird mit Hilfe der Figuren 1 bis 3 beschrieben.

Es zeigen

Fig. 1 die Vorrichtung mit der Röntgenröhre und der Schlitzblende und den Strahlungsempfängern und

Fig. 2 einen Überblick über die den Strahlungsempfängern nachgeschalteten Geräte und

Fig. 3 eine aus zwei Ringen aufgebaute Schlitzblende.

Die Röntgenröhre 11 ist von der Schlitzblende 12 ringförmig umgeben. Die Schlitzblende ist durch die drei Rollen 28, 29, 30 gelagert. Eine dieser Rollen wird durch einen in der Drehzahl sehr genau geregelten Motor angetrieben.

Die Drehzahl kann gleichförmig sein. Es kann aber auch die Drehgeschwindigkeit veränderlich sein und z. B. mit der veränderlichen Bandgeschwindigkeit gekoppelt sein.

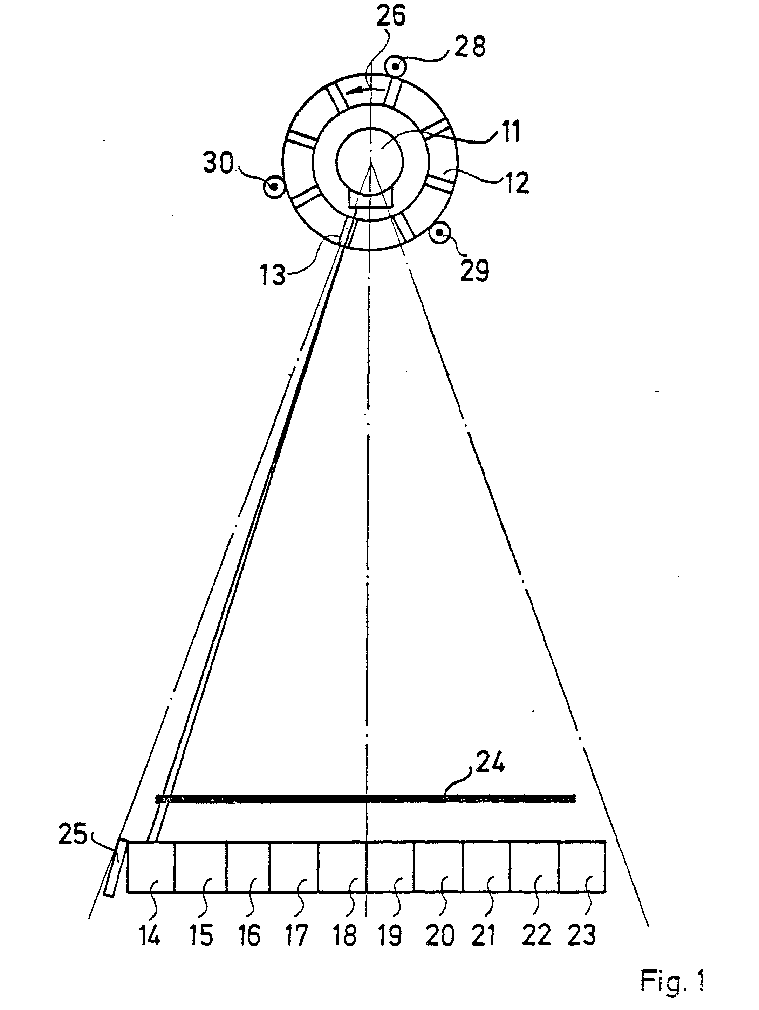

In der Schlitzblende 12 braucht nur ein Schlitz 13 vorhanden zu sein, wenn diese eine relativ große Drehzahl hat. Wenn mehr als ein Schlitz in der Schlitzblende 12 vorhanden ist, kann die Drehzahl entsprechend kleiner gewählt werden. Es ist günstig, wenn soviel Schlitze 13 vorhanden sind, daß ein Strahlungsempfänger von einem neuen Strahl an der einen Kante getroffen wird, kurz nachdem an der gegenüberliegenden Kante der vorhergehende Strahl diesen verlassen hat. In der Fig. 1 liegen unterhalb des zu messenden Blechbandes die zehn Strahlungsempfänger 14 bis 23. Für diese ist ein Strahlenkegel notwendig, der z. B. einen Winkel von ca. 36° einschließt. Auf dem entsprechenden Segment der Schlitzblende 12, das ebenfalls einen Winkel von ca. 36° einschließt, dürften höchstens zehn Schlitze untergebracht werden. Der Pfeil 26 an der Schlitzblende 12 gibt die Drehrichtung der Schlitzblende an.

Am Anfang der Linie der Strahlungsempfänger ist der Hilfsdetektor 25 angebracht.

Dieser ist ein Mittel zur automatischen Korrektur, wenn zwischen dem Gestell, an dem die Röntgenröhre (11) gelagert ist, und dem Gestell, an dem die Strahlungsempfänger (14 bis 23) gelagert sind, kleine Lageveränderungen auftreten, weil der Beginn der Messungen, unabhängig von solchen Lageveränderungen, erst durch das Auftreffen des Strahles auf den Hilfsdetektor 25 gestartet wird.

Es wird zunächst vom Strahl des Schlitzes 13 der Hilfsdetektor 25 getroffen. Dieser bewirkt ein Signal, durch das ein Zerhacker 42 gestartet wird. Dieser Zerhacker 42 unterteilt alle von den Strahlungsempfängern 14 bis 23 ausgehenden Meßsignale in zeitliche Intervalle, die so lange dauern, wie ein Strahl braucht, um die Breite eines Meßbereiches auf dem Blechband 24 zu überstreichen. Die Breite des Strahlungsempfängers entspricht mehreren Meßbereichen.

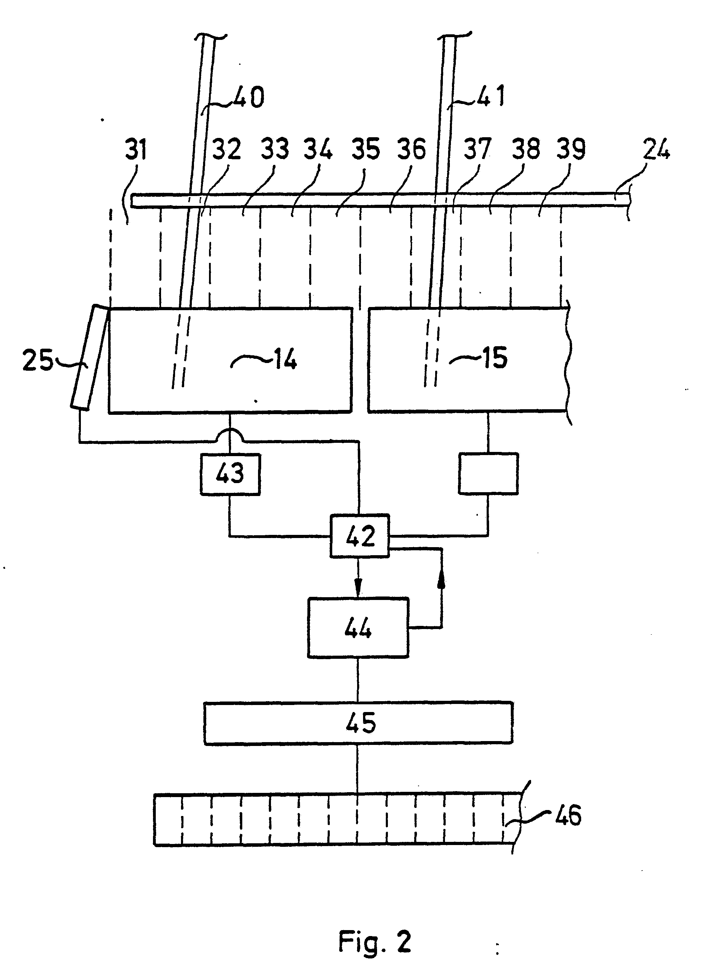

Der in der Fig. 2 dargestellte Strahlungsempfänger 14 enthält fünf Meßbereiche, die gestrichelt angedeutet sind und mit 31 bis 35 bezeichnet sind. Vom daneben liegenden Strahlungsempfänger 15 sind die Meßbereiche 36 bis 39 eingezeichnet. In der Fig. 2 befindet sich der von der Schlitzblende 12 hindurchgelassene Strahl 40 gerade im Meßbereich 32, während der nächst folgende Schlitz der Schlitzblende 12 einen Strahl 41 auf den Meßbereich 37 des folgenden Strahlungsempfängers 15 durchläßt. In der Fig. 1 sind nur wenige Schlitze eingezeichnet. Es müssen sehr viel mehr Schlitze vorhanden sein, wenn eine so dichte Folge von Strahlen, wie sie in Fig. 2 durch die Strahlen 40 und 41 angedeutet ist, erreicht werden soll.

Wenn die Schlitzblende 12 entsprechend dem Pfeil 26 gedreht wird, so durchläuft der Strahl 40 die Meßbereiche vom Strahlungsempfänger 14 in Richtung zum Strahlungsempfänger 15. Durch den Strahl 40 wird zuerst der Hilfsdetektor 25 getroffen, wodurch dieser einen Stromimpuls zum Zerhacker abgibt. Durch diesen Impuls wird der Zerhacker 42 gestartet. Wenn der Strahl 40 den Meßbereich 31 überstreicht, wird der Strahl entsprechend der zu durchdringenden Dicke des Blechbandes 24 geschwächt. Im Strahlungsempfänger 14 wird ein von der Intensität des Strahles 40 abhängiger Strom erzeugt. Dieser Strom fließt über den Verstärker 43 und über den Zerhacker 42 zum Weggeber 44 in das Verarbeitungsgerät 45, wo er in eine der Dicke des Blechbandes 24 entsprechende Meßgröße verarbeitet wird. Diese Meßgröße wird an das Anzeigegerät 46 weitergegeben. Zusätzlich zum Anzeigegerät können auch weitere Geräte z. B. zur Korrektur des Walzprozesses angeschlossen sein.

Der Zerhacker 42 unterbricht den von allen Strahlungsempfängern ankommenden Strom kurzzeitig. Die Frequenz der Unterbrechungen ist genau auf die Anzahl der Schlitze 13 und die Drehzahl der Schlitzblende 12 zeitlich abgestimmt.

Im Weggeber 44 wird die Anzahl der Stromunterbrechungen des Zerhackers, vom durch den Hilfsdetektor 25 erfolgten Start an, mitgezählt. Die zeitliche Dauer zwischen zwei Unterbrechungen des Zerhackers 42 entspricht der Dauer, die der Strahl 40 zum Überstreichen z. B. des Meßbereiches 31 braucht. Der Verstärker 43 überlagert dem Ausgangsstrom ein Erkennungssignal, das sich von den Erkennungssignalen der anderen Verstärker, die den anderen Strahlungsempfängern nachgeschaltet sind, unterscheidet. Aus dem Erkennungssignal erkennt der Weggeber 44, welchem Strahlungsempfänger die Meßgröße zuzuordnen ist und aus der mitgezählten Anzahl der Unterbrechungen des Zerhackers 42 erkennt der Weggeber, in welchem Meßbereich des betreffenden Strahlungsempfängers sich gerade der Strahl befindet.

Der Weggeber 44 gibt die Meßgröße zusammen mit einem jeden Meßbereich zugeordnetem Signal an das Verarbeitungsgerät 45. Dieses ist im wesentlichen ein programmierter Computer, der in an sich bekannter Weise aus der gemessenen Intensität des empfangenden Strahles die Dicke des Blechbandes 24 errechnet, wobei auch störende Einflüsse mit korrigiert werden. Es wird zum Beispiel berücksichtigt und korrigiert, daß die Intensitätsverteilung der Röntgenröhre 11 über der Breite des Strahlungsfensters nicht gleichmäßig ist. Es werden außerdem die verschiedenen Längen des Weges des Strahles und die verschiedenen Einfallswinkel im Strahlungsempfänger zwischen z. B. in der Mitte des Blechbandes 24 liegenden und am Rande liegenden Strahlungsempfängern, oder die verschiedene Empfindlichkeit über der Breite des Strahlungsempfängers korrigiert. Die Werte der einzelnen Meßbereiche können einem Anzeigegerät 46 zugeführt werden, dessen Anzeigebildschirm ebenfalls in die gleiche Anzahl von Meßbereichen unterteilt ist. Jedem der Meßbereiche 31 bis 39 entspricht analog und lagemäßig ein schmaler Streifen auf dem Bildschirm des Anzeigegerätes 46. Diese Streifen sind gestrichelt angedeutet. Die Werte der Dicke des Blechbandes 24 können digital angezeigt werden, sie können aber auch als Punkte auf dem Bildschirm dargestellt werden, wobei die Höhenlage der Punkte der Größe der Dicke entspricht. Die Punkte können auch zu einer Kurve verbunden sein. Es ist auch jedes beliebige andere Anzeigegerät anschließbar.

Der Zerhacker 42 wird durch den Zähler im Weggeber 44 ausgeschaltet, wenn dieser in der Fig. 2 die Zahl 5 erreicht hat. Es tritt dann eine kurze Pause ein, bis ein neuer Strahl den Hilfsdetektor 25 trifft.

Die Synchronisation zwischen der Schlitzblende 12 und dem Zerhacker 42 ist auch dadurch möglich, daß an der Schlitzblende 12 ein genau gehender Drehzahlmesser angebracht ist, der mit einem Frequenzgenerator im Zerhacker gekoppelt ist. Der Zerhacker kann als Trigger-Impulsgeber aufgebaut sein.

Als Strahlungsempfänger eignen sich z. B. Plastik-Szintillatoren, denen in bekannter Weise Photomultiplier und Verstärker oder Zähleinrichtungen nachgeschaltet sind.

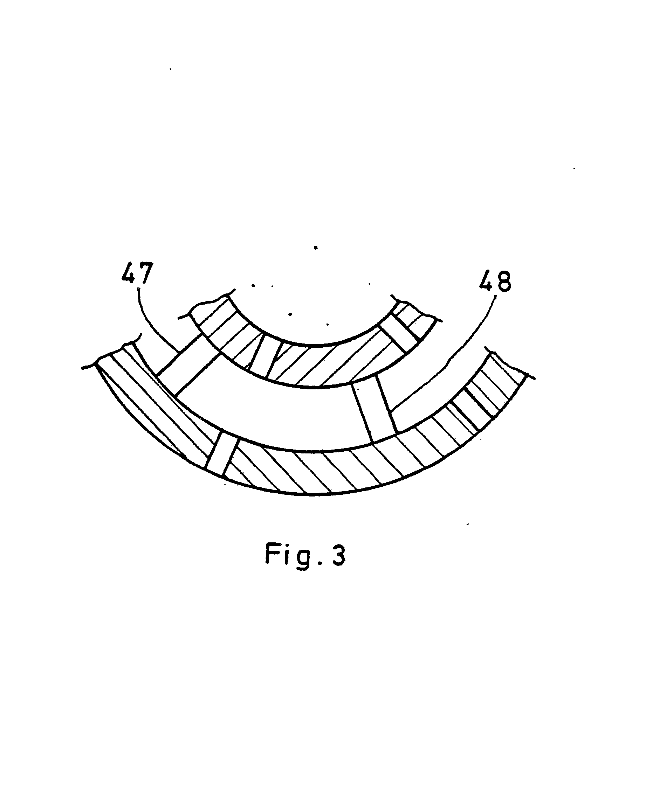

Die Schlitzblende 12 kann, wie in Fig. 3 angedeutet, auch aus zwei konzentrischen Ringen bestehen, die z. B. durch Speichen 47 und 48 verbunden sind. Es können auch noch mehr als zwei Ringe genommen werden.

Wegen des großen Auflösungsvermögens der Messung sind aus den Meßwerten auch leicht die Lage der Blechkanten und damit die Breite des Blechbandes ermittelbar.

Die Erfindung beschränkt sich nicht auf das beschriebene Ausführungsbeispiel.

## Patentansprüche

1. Vorrichtung zur Messung des Dickenprofils von gewalzten metallischen Blechen und Blechbändern (24) mit einer Röntgenröhre (11), mit einer dicht vor dieser liegenden beweglichen Schlitzblende (12) und mit in einem Abstand davor, entlang einer Linie fest installierten auf die Strahlung ausgerichteten Strahlungsempfängern (14 bis 23), wobei das zu messende Blech oder Blechband (24) durch die Strahlung zwischen der Röntgenröhre (11) bzw. Schlitzblende (12) und den Strahlungsempfängern (14 bis 23) so hindurchbewegt wird, daß seine Breite sich entlang der Linie der fest installierten Strahlungsempfänger (14 bis 23) erstreckt, und mit einem an die Strahlungsempfänger und einen Weggeber (44) der Schlitzposition angeschlossenen Verarbeitungsgerät (45) zur Bestimmung der Strahlungsabsorption und zur Zuordnung der Dicken des Bleches/Bandes zu den über der Breite des Bleches/Bandes (24) verteilten Meßpunkten oder Meßbereichen (31 bis 39), das mit einem Anzeigegerät (46) verbunden ist, dadurch gekennzeichnet, daß die Schlitzblende (12) kreisförmig um den die Röntgenstrahlen aussendenden Teil der Röntgenröhre (11) herumgebaut ist, drehbar gelagert ist und von einem Antrieb angetrieben ist, daß der Abstand zwischen der Schlitzblende (12) und den Strahlungsempfängern (14 bis 23) mehr als 1 500 mm beträgt, daß die Röntgenröhre (11) mit der Schlitzblende (12) und die Strahlungsempfänger (14 bis 23) in getrennten Gestellen installiert sind und für den Weggeber (44) Mittel zur Korrektur eingebaut sind, durch die kleine Veränderungen in der Lage der Befestigungspunkte von Schlitzblende (12) und Strahlungsempfänger (14 bis 23) berücksichtigt sind.

2. Vorrichtung nach Anspruch 1, dadurch gekennzeichnet, daß der Weggeber (44) im Gestell mit den Strahlungsempfängern (14 bis 23) eingebaut ist und an einem Ende des durch die in einer Linie angeordneten Strahlungsempfänger gebildeten Gesamtmeßbereiches ein Strahlungsempfänger (25) eingebaut ist, der beim Auftreffen eines Strahles eine Zerhackvorrichtung (42) startet oder auch stoppt, wobei die Zerhackvorrichtung (42) zwischen jedem Strahlungsempfänger (14 bis 23) und dem Verarbeitungsgerät (45) zwischengeschaltet ist und die Frequenz des Zerhackens auf die Drehzahl der Schlitzblende (12) zeitlich abgestimmt ist.

3. Vorrichtung nach den Ansprüchen 1 und 2, dadurch gekennzeichnet, daß im Verarbeitungsgerät (45) eine Fehlerkorrekturvorrichtung für den Meßwert der Absorption enthalten ist, in der die nicht gleichmäßige Intensitätsverteilung der Röntgenröhre (11) über der Breite des Strahlungsfensters, oder die verschiedene Länge des Strahlungsweges zum Strahlungsempfänger, oder verschiedene Winkel der in den Strahlungsempfänger einfallenden Strahlung oder die Lage des Strahles auf der Breite des Strahlungsempfängers berücksichtigt wird.

## Claims

1. A device for measuring the thickness profile of rolled metal sheets and strips (24), comprising an X-ray tube (11), a movable slit diaphragm (12) lying closely in front thereof and radiation detectors (14 to 23) fixedly installed at a distance in front thereof, along a line and directed towards the radiation, the sheet or strip (24) to be measured being moved through the radiation between the X-ray tube (11) or slit diaphragm (12) and the radiation detectors (14 to 23) in such a way that its width extends along the line of the fixedly installed radiation detectors (14 to 23) and a processing device (45) being connected to the radiation detectors and a displacement pick-up (44) of the slit position to determine the radiation absorption and for allocation of the thicknesses of the sheet/strip to the measuring points or measuring areas (31 to 39) distributed over the width of the sheet/strip (24), which device (45) is connected with a display device (46), characterized in that the slit diaphragm (12) is constructed circularly around the part of the X-ray tube (11) emitting the X-ray rays, is mounted rotatably and is driven by a drive, in that the distance between the slit diaphragm (12) and the radiation detectors (14 to 23) amounts to more than 1 500 mm, in that the X-ray tube (11) with the slit diaphragm (12) and the radiation detectors (14 to 23) are installed in separate frames and in that means for correction are inserted for the displacement pick-up (44), by means of which small alterations in the position of the attachment points of the slit diaphragm (12) and the radiation detectors (14, 23) are taken into account.

2. A device according to claim 1, characterized in that the displacement pick-up (44) is inserted in the frame with the radiation detectors (14 to 23) and a radiation detector (25) is inserted at one end of the total measuring area formed by the radiation detectors arranged in a line, which radiation detector (25) starts or also stops a chopping device (42) on impingement of a ray, the chopping device (42) being connected between each radiation detector (14 to 23) and the processing device (45) and the frequency of the chopper being temporally conformed to the speed of rotation of the slit diaphragm (12).

3. A device according to claim 1 or claim 2, characterized in that in the processing device (45) there is contained a fault correction device for the measured value of the absorption, in which the uneven intensity distribution of the X-ray tube (11) over the width of the radiation window, or the different lengths of the radiation path to the radiation detector, or different angles of the radiation incident in the radiation detector or the position of the radiation on the width of the radiation detector is taken into account.

## Revendications

1. Dispositif de mesure du profil d'épaisseur de tôles et bandes de tôles métalliques laminées (24), ce dispositif comportant un tube à rayons X (11), un diaphragme à fente (12) mobile disposé tout près devant lui, et des récepteurs de rayonnement (14 à 23) orientés vers le rayonnement, fixés à distance, en ligne, la tôle ou la bande de tôle à mesurer (24) étant déplacée à travers le rayonnement, entre le tube à rayons X (11) ou le diaphragme à fente (12), et les récepteurs de rayonnement (14 à 23), de telle sorte que sa largeur s'étende le long de la ligne des récepteurs de rayonnement fixes (14 à 23), et un appareil de traitement (45) raccordé aux récepteurs de rayonnement et à un indicateur de position (44) de la position de la fente, pour déterminer l'absorption du rayonnement et associer les épaisseurs de la bande aux points de mesure ou zones de mesure (31 à 39) répartis sur la largeur de la bande/tôle (24), cet appareil étant raccordé à un appareil indicateur (46), caractérisé en ce que le diaphragme à fente (12) entoure, de manière circulaire, la partie du tube à rayons X (11) émettant les rayons X, est monté de manière rotative, et est actionné par une commande, en ce que la distance entre le diaphragme à fente (12) et les récepteurs de rayonnement (14 à 23) est supérieure à 1 500 mm, en ce que le tube à rayons X (11) avec le diaphragme à fente (12) et les récepteurs de rayonnement (14 à 23) sont installés dans des bâtis séparés, et que des moyens de correction sont prévus pour l'indicateur de position (44), par lesquels de petites modifications de position des points de fixation du diaphragme à fente (12) et des récepteurs de rayonnement (14 à 23) peuvent être prises en compte.

2. Dispositif selon la revendication 1, caractérisé en ce que l'indicateur de position (44) est prévu dans le bâti des récepteurs de rayonnement (14 à 23) et, à une extrémité de la zone de mesure représentée par les récepteurs de rayonnement alignés, est prévu un récepteur de rayonnement (25) qui, lorsqu'il est frappé par un rayon, actionne ou arrête un dispositif échantillonneur (42), le dispositif échantillonneur (42) étant connecté entre chaque récepteur de rayonnement (14 à 23) et l'appareil de traitement (45), et la fréquence de l'échantillonnage étant synchronisée sur la rotation du diaphragme à fente (12).

3. Dispositif selon les revendications 1 et 2, caractérisé en ce qu'un dispositif de correction d'erreur pour la valeur de mesure de l'absorption est prévu dans l'appareil de traitement (45), dispositif de correction dans lequel sont pris en compte la répartition non uniforme de l'intensité du tube à rayons X (11) sur la largeur de la fenêtre de rayonnement, ou la longueur différente du trajet du rayonnement jusqu'au récepteur de rayonnement, ou les angles différents du rayonnement frappant les récepteurs de rayonnement, ou la position du rayon sur la largeur du récepteur de rayonnement.

Fig. 1

Fig. 2

47    48

Fig. 3